Europäisches Patentamt

European Patent Office

Office européen des brevets

(11) Publication number: **0 301 153**
A1

# (12) EUROPEAN PATENT APPLICATION

(21) Application number: 87830301.5

(51) Int. Cl.4: **B60D 1/00**

(22) Date of filing: 31.07.87

(43) Date of publication of application:
01.02.89 Bulletin 89/05

(84) Designated Contracting States:
**AT BE DE ES FR GB NL**

(71) Applicant: MIVAR 85 S.r.l.
Via Nocotera, 9
I-20161 Milano(IT)

(72) Inventor: **Schiappati, Alberto**
MIVAR 85 S.r.l. Via Nicotera, 9
I-20161 Milano(IT)

(74) Representative: **Cicogna, Franco**
Ufficio Internazionale Brevetti Dott.Prof.
Franco Cicogna Via Visconti di Modrone,
14/A
I-20122 Milano(IT)

(54) Movable hitch assembly specifically designed for motor vehicles.

(57) The hitch assembly comprises a bracket-shaped element (1),adapted to be affixed to the motor vehicle body (2),and defining a cavity (3) in which the stem (10) of a hook-shaped element (11) may be inserted,the hook-shaped element (11) being provided with a hollow (21) in which a locking eccentric element (20) may be removably engaged, the eccentric element (20) being rotatably supported by the bracket-shaped element (1),a removable restraining element (31) being further provided which acts on the locking element (20).

Fig. 1

# REMOVABLE HITCH ASSEMBLY SPECIFICALLY DESIGNED FOR MOTOR VEHICLES

## BACKGROUND OF THE INVENTION

The present invention relates to a removable hitch assembly or structure,specifically designed for application to motor vehicles.

As is known,the hitch assemblies used on motor vehicles essentially consist of a hook shaped portion or element which is rigidly affixed to an attaching body coupled to the lower end portion of the motor vehicle.

These known hitch assemblies have the drawback that they always project,for a length,from the motor vehicle body and,accordingly,they may represent an obstacle.

Yet another drawback of known hitch assemblies is that,since the hitch element is always coupled to the motor vehicle,it is necessary to protect the ball end of the hook shaped element itself in order from preventing its surface from being damaged by dust or possible contamination.

## SUMMARY OF THE INVENTION

Thus,the task of the present invention is to overcome the above mentioned drawbacks by providing such a hitch assembly for motor vehicles which may be easily fitted to the motor vehicle and easily and quickly removed therefrom,without the need of using specifically designed tools or implements.

Within this task,it is a main object of the present invention to provide a hitch assembly for motor vehicles which is very safe and reliable and provided with one or more restraining elements from preventing the hitch from being accidentally disengaged.

Another object of the present invention is to provide such a hitch assembly,specifically designed for application to motor vehicles,which may be easily fabricated starting from easily available elements and materials and which,moreover,is very competitive from a mere economical standpoint.

## BRIEF DESCRIPTION OF THE DRAWINGS

Further characteristics and advantages of the present invention will become more apparent thereinafter from the following detailed disclosure of an embodiment of a removable hitch assembly,specifically designed for motor vehicles,being illustrated,by way of an indicative but not limitative example in the accompanying drawings,where:

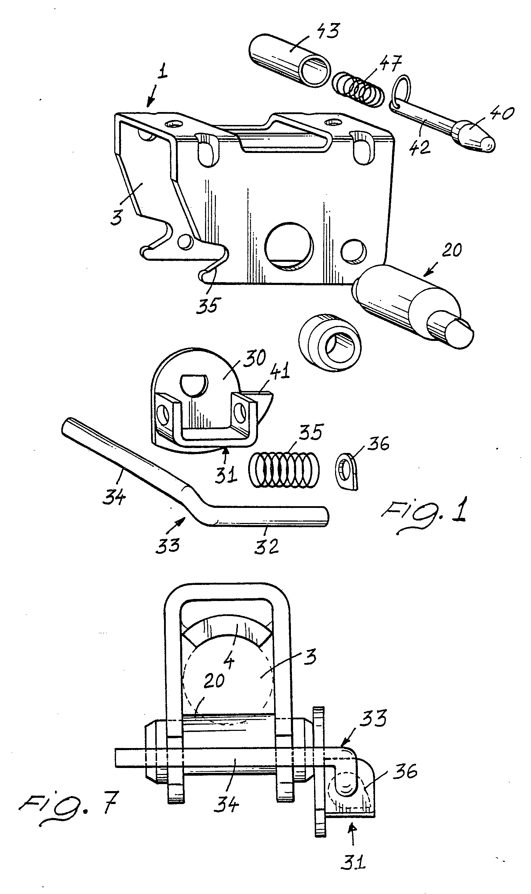

fig.1 is a schematic exploded perspective view illustrating the hitch assembly for motor vehicles according to the present invention;

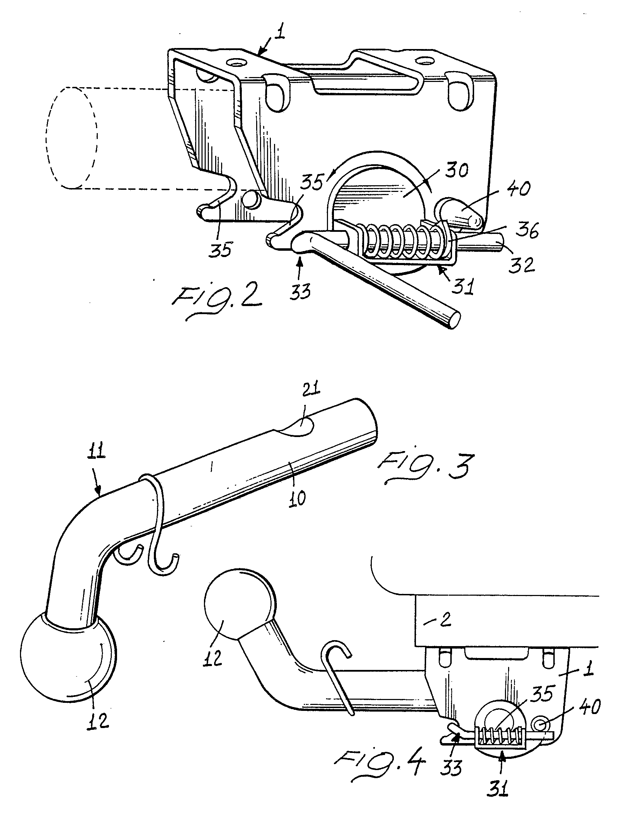

fig.2 illustrates,by a perspective view, a bracket element associated with the hitch assembly according to the present invention;

fig.3 is a perspective view illustrating the hook-shaped element included in the hitch assembly according to the invention;

fig.4 is an elevation side view illustrating the hitch assembly according to the invention applied to a motor vehicle;

fig.5 is a schematic cross-longitudinal view illustrating the hitch assembly according to the present invention and the hook-shaped element applied thereto;

fig.6 illustrates the hitch assembly according to the present invention during the removing step of the hook-shaped element; and

fig.7 illustrates the hitch assembly as seen from one end.

## DESCRIPTION OF THE PREFERRED EMBODIMENT

With reference to the above mentioned figures, the removable hitch assembly,particularly designed for application to motor vehicles,according to the present invention,comprises a bracket shaped element, indicated overall at the reference number 1,which has a substantially U shaped cross section.

More specifically the U shaped element is provided for application to the lower rear portion of the body 2 of a motor vehicle.

In its inside the bracket shaped element defines a cavity 3,which is delimited at the top by an abutment member 4 thereinto the stem 10 of a hook-shaped element 11 may be inserted which,at the other end,is formed with the conventional coupling ball element 12.

In the cavity 3,at the opposite portion to the stem 10 introduction end,there is provided an abutment member 15 adapted for a proper location of the hook shaped element 11.

In order to lock in its position the hook shaped element there is provided an eccentric body 20 which is rotatably supported by the side legs of the bracket element 1 and is provided with an eccentric portion which may be inserted into a hollow 21 correspondingly formed on the hook-shaped element.

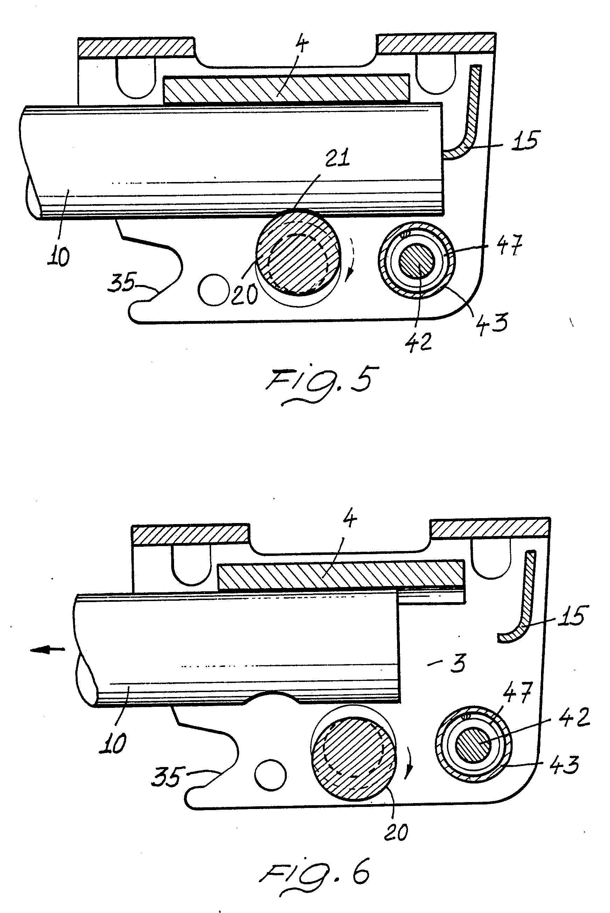

As is schematically shown in figures 5 and 6,by upwardly rotating the eccentric locking element, the hook-shaped element will be locked whilst,by downwardly rotating said eccentric element,the hook element will be disengaged.

As is shown,the hitch assembly according to the present invention comprises removable stop or restraining elements which act on the eccentric locking element in order to prevent it from being accidentally disengaged.

Such a restraining or stop element consists of a plate 30 which is affixed to one end of the eccentric locking element 20 and is provided with a U-shaped panel 31 slidingly supporting the first leg 32 of a L-shaped wrench,indicated at 33,and having its other leg 34 which may be housed in a locking hollow or cavity 35 which is correspondingly defined at the front end portions of the legs of said bracket shaped element 1.

In order to hold the second leg 34 in its cavity or hollow, there is provided a first spring 35 acting between a portion of the panel 31 and a shaped stop or restraining element 36,which latter is affixed on the leg 32,and which operates to limit the rotation of the L-shaped element beyond the horizontal position.

There is moreover provided a second stop or restraining element,consisting of a tapered peg 40 which is coupled to a lug 41 of the plate 30 in order to prevent it from turning.

More specifically the tapered peg 40 is coupled to a stem 42 which is housed in a tubular portion 43 for joining the legs of the bracket shaped element and projects at the other end threat it is provided with a grasping ring.

On the tapered peg 40 a second spring acts, indicated at 47,which resiliently presses the tapered peg 40 to a locking position and which operates as a counterbiassing element for the return translation of the tapered peg.

In order to lock the hook-shaped element 11, the eccentric element 20 must be turned so as to insert it into the undercut portion 21 and then the second leg 34 of the L-shaped element 33 must be located in the locking hollow 35 of the bracket shaped element,in order to prevent the eccentric element from rotating.

A further locking to the eccentric element rotation is moreover provided by the tapering peg 40 engaging with the lug 41.

In order to carry out the unlocking operation, it will be sufficient to act initially on the L-shaped element with a translation in the direction of the firts leg,to disengage it from the hollow 35 and then to rotate it to withdraw it from said hollow or cavity.

Then the tapered peg 40 must be operated,to cause it to return into the inside of the bracket, so as to rotatively unlock said eccentric element.

From the above disclosure it should be apparent that the invention fully achieves the intended task and objects.

In particular the fact should be pointed out that a hitch assembly for motor vehicles has been provided which may be easily removed,while providing a great locking guarantee.

In practicing the invention the used materials, provided that they are compatible to the intended use,as well as the contingent size and shapes,may be any according to requirements.

## Claims

1- A removable hitch assembly,specifically designed for motor vehicles,characterized in that it comprises a bracket-shaped element,adapted to be affixed to the vehicle body,and defining a cavity in which the stem of a hook-shaped element may be inserted,said hook-shaped element being provided with a hollow in which a locking eccentric element may be removably engaged,said eccentric element being rotatably supported by said bracket-shaped element,a removable restraining element being further provided which acts on the locking element.

2- A removable hitch assembly,according to the preceding claim,characterized in that said cavity is delimited at the top thereof by an abutment element and is limited at the rear portion thereof by a stop abutment element engaging with the end of the stem of said hook-shaped element.

3- A removable hitch assembly,according to the preceding claims,characterized in that said locking eccentric element is rotatably supported by the legs of the bracket-shaped element in a direction which is substantially perpendicular to said stem extension.

4- A removable hitch assembly,according to one or more of the preceding claims,characterized in that a removable stop or restraining element comprises a plate affixed to one end of the eccentric locking element and provided with a panel portion of substantially U-shape which supports on its legs the first leg of a L-shaped element having the second leg adapted for removable insertion into locking hollows defined at the front end portion of said bracket-shaped element.

5- A removable hitch assembly,according to one or more of the preceding claims,characterized in that it comprises a first spring,operating on the first leg of the L-shaped element between said panel and a shaped stop or restrainig element adapted to restrain the rotation of said L-shaped element about the first leg.

6- A hitch assembly,according to one or more of the preceding claims,characterized in that it comprises a second stop or restraining element,consisting of a tapering peg transversely projecting from said bracket element and adapted for removable engagement with a lug of said plate.

7- A hitch removable assembly,according to one or more of the preceding claims,characterized in that said tapering peg is supported by a stem which is slidingly supported inside a tubular body for joining the legs of said bracket-shaped element,under the biassing of a second spring,said stem being provided with a portion projecting from the other portion of the bracket-shaped element,thereat a grasping element is provided.

Fig. 1

Fig. 7

Fig. 2

Fig. 3

Fig. 4

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-2 639 160 (R. STUDEBAKER) <br> * Whole document * <br> --- | 1-3 | B 60 D 1/00 |
| X | FR-A-2 163 169 (PEKA-FAHRZEUGBAU EBERHARDT KG) <br> * Page 5, lines 6-29; figures 1-4 * <br> --- | 1 | |
| A | DE-A-1 780 472 (O. RIEHLE) <br> * Page 2, line 21 - page 3, line 15; figures 1,2 * <br> --- | 1 | |
| A | US-A-2 944 836 (C. MATTHEWS) <br> * Column 1, line 63 - column 2, line 15; figures 1-4 * <br> --- | 1 | |
| A | US-A-2 859 995 (M. RIGAUD) <br> * Column 2, lines 56-68; figures 1,4,5 * <br> ----- | 5 | |

TECHNICAL FIELDS
SEARCHED (Int. Cl.4)

B 60 D

The present search report has been drawn up for all claims

| Place of search | Date of completion of the search | Examiner |
|---|---|---|
| THE HAGUE | 24-03-1988 | LINTZ C.H. |